# EUROPÄISCHE PATENTANMELDUNG

(11) **EP 2 541 560 A1**
(43) Veröffentlichungstag der Anmeldung: **02.01.2013**
(21) Anmeldenummer: 11305850.7
(22) Anmeldetag: 01.07.2011
(51) Int. Cl.: H01B 12/16

(54) **Supraleiterkabel**

(71) Anmelder: Nexans, 75008 Paris (FR)
(72) Erfinder: Dr. Soika, Rainer, 30559 Hannover (DE); Dr. Stemmle, Mark, 30625 Hannover (DE)
(74) Vertreter: Taruttis, Stefan Georg

(57) **Zusammenfassung**

Die Erfindung betrifft ein Supraleiterkabel, das einen Kryostaten mit zwei konzentrischen Metallrohren aufweist und sich dadurch auszeichnet, dass der Kryostat zumindest einen ersten axialen Abschnitt mit einer ersten axialen Federkonstante aufweist, und zumindest einen zweiten axialen Abschnitt, der eine zweite axiale Federkonstante aufweist, die maximal 20%, bevorzugter maximal 10% der axialen Federkonstante des ersten Abschnitts beträgt.

## Beschreibung

### Supraleiterkabel

Die vorliegende Erfindung betrifft ein Supraleiterkabel, bei dem in einem Kryostat mit zwei konzentrischen gewellten Metallrohren, deren Zwischenraum zur Isolierung evakuiert ist, längs eine Kabelseele angeordnet ist, die um einen Kern zumindest einen supraleitfähigen Phasenleiter aufweist.

Der Kern ist vorzugsweise aus Kupfer oder einem metallischen Werkstoff, und kann sowohl massiv oder hohl sein als auch aus verseilten Einzelleitern bestehen und weist bevorzugt einen koaxialen inneren Kühlkanal auf.

### Stand der Technik

Die EP 1617537 beschreibt, dass die Längendifferenz der Kabelseele, die in einem Kryostaten längsverschieblich angeordnet ist, dadurch gegenüber einem angeschlossenen Normalleiter ausgeglichen wird, dass der Normalleiter ein rohrförmiges Bauteil aufweist, das die supraleitfähige Kabelseele längsverschieblich umgibt.

Die EP 1480231 B 1 beschreibt die Herstellung eines Supraleiterkabels, bei dem der Kryostat auf eine Kabeltrommel aufgewickelt wird, und erst im aufgewickelten Zustand die Enden der Kabelseele mit den Enden des Kryostats verbunden werden, um eine Überlänge der Kabelseele gegenüber dem Kryostat zu erreichen, die eine Kompensation des unterschiedlichen Kontraktionsverhaltens des Kryostats gegenüber der Kabelseele beim Abkühlen erlaubt.

### Aufgabe der Erfindung

Die Aufgabe der Erfindung liegt darin, ein Supraleiterkabel bereitzustellen, bei dem eine alternative Kompensation für den Unterschied der Längenänderung des Kryostats gegenüber der Längenänderung der Kabelseele beim Abkühlen erreicht wird.

### Allgemeine Beschreibung der Erfindung

Die Erfindung löst die Aufgabe mit den Merkmalen der Ansprüche und insbesondere mit einem Supraleiterkabel, das einen Kryostaten mit zwei konzentrischen Metallrohren aufweist, zwischen denen ein Vakuum und vorzugsweise Isoliermaterial angeordnet ist, mit einer parallel zur Längsachse des Kryostaten in diesem angeordneten Kabelseele, die supraleitfähige Phasenleiter um einen Kern aufweist, der vorzugsweise einen inneren Kühlkanal hat. Das erfindungsgemäße Supraleiterkabel zeichnet sich dadurch aus, dass der Kryostat zumindest einen ersten axialen Abschnitt mit einer ersten axialen Federkonstante aufweist, und zumindest einen zweiten axialen Abschnitt, der eine zweite axiale Federkonstante aufweist, die maximal 20%, bevorzugter maximal 10% der axialen Federkonstante des ersten Abschnitts beträgt. Optional ist die Kabelseele jeweils an den Enden des Kryostats fixiert. Im vorhergehenden Abschnitt wurde mit "Federkonstante" generell die Federkonstante je Längeneinheit, insbesondere pro Meter, des ersten oder des zweiten Abschnitts des Kryostats, und nicht die Federkonstante des gesamten Abschnitts bezeichnet. Entsprechend wird nachfolgend die Federkonstante auch als spezifische Federkonstante bezeichnet.

Vorzugsweise hat der zweite Abschnitt des Kryostats eine Länge von maximal 10%, bevorzugter maximal 5% der Länge des ersten Abschnitts.

Generell sind die konzentrischen Metallrohre des Kryostats Wellrohre, die eine ringförmige, vorzugsweise wendelförmige umlaufende Wellung aufweisen. Die Metallrohre bestehen aus Stahl, insbesondere Edelstahl, und werden vorzugsweise durch Verschweißen zweier gegenüberliegender, parallel zur Längsachse verlaufender Kanten eines kreisförmig gebogenen Stahlblechs hergestellt.

Metallische Werkstoffe wie Kupfer oder Edelstahl kontrahieren bei der Abkühlung von Raumtemperatur auf die Temperatur des Flüssigstickstoffs, die auch im Betriebszustand des erfindungsgemäßen Kabels eingestellt ist, um ~ 0.3 %. So führt dann auch bei Supraleiterkabeln die Abkühlung von Umgebungstemperatur auf die Temperatur des Betriebszustands für die Supraleitung mit flüssigem Stickstoff dazu, dass sich die Kabelseele um ca. 0,3% kontrahiert, während der Kryostat als Kombination eines kontrahierenden (kalten inneren) Wellrohres und eines sich nicht kontrahierenden (äußeren, warmen) Wellrohres sich nur um etwa die Hälfte, also ~ 0,15 %, zusammenzieht. Diese Differenz bei der Kontraktion zwischen Kryostat und Kabelseele führt zu, dass Durchführungen und/oder die Befestigungseinrichtungen, in denen die Kabelseele an den Enden des Kryostats geführt bzw. festgelegt ist, eine erhebliche mechanische Last zwischen Kryostat und Kabelseele aufnehmen. Diese Spannung bzw. Last wird beim erfindungsgemäßen Supraleiterkabel wesentlich reduziert, da die geringere axiale spezifische Federkonstante des zweiten Abschnitts des Kryostats unter der Last stärker komprimiert wird. Optional und bevorzugt weist die Kabelseele eine Überlänge gegenüber dem Kryostaten auf und bevorzugt weist der Kryostat beim Verfahren zur Herstellung einer elektrischen Verbindung bei Raum- bzw. Umgebungstemperatur eine Überlänge zwischen den Verschlußstücken und/oder eine Überlänge gegenüber der Kabelseele auf. In dieser Ausführungsform wird beim Temperieren auf die Betriebstemperatur des Supraleiters durch Einfüllen von Kühlmittel, insbesondere von flüssigem Stickstoff, die Überlänge der Kabelseele vermindert.

Bei einer bevorzugten Ausführungsform weist das Supraleiterkabel jeweils endständig einen zweiten Abschnitt mit geringerer axialer spezifischer Federkonstante auf, zwischen denen ein erster Abschnitt mit erster axialen spezifischen Federkonstante angeordnet ist. Ist die Länge des supraleitenden Kabels so lang, dass die Kabelstrecke über Kabelmuffen verfügt, sind in bevorzugter Ausführung mehrere Kompensationssektionen, die jeweils ein zweiter Abschnitt mit geringerer axialer spezifischer Federkonstante sind, in der Umgebung der Kabelmuffen angeordnet, insbesondere einseitig oder beidseitig angrenzend an eine Kabelmuffe.

Die geringe axiale spezifische Federkonstante eines zweiten Abschnitts des Kryostats kann durch eine tiefere Wellung, z.B. um eine im Verhältnis zur Welltiefe des ersten Abschnitts um mindestens 10%, bevorzugt mindestens 15 bis 20% größere Welltiefe und/oder eine größere Anzahl von Wellungen, z.B. um eine im Verhältnis zur Wellzahl des ersten Abschnitts um mindestens 10%, bevorzugt mindestens 15 bis 20% größere Anzahl von Wellen pro Längenabschnitt und/oder eine reduzierte Wandstärke, insbesondere eine um mindestens 10%, bevorzugt mindestens 15 bis 20% im Verhältnis zur Wandstärke des ersten Abschnitts in dem zweiten axialen Abschnitt jedes der konzentrischen Metallrohre des Kryostats realisiert sein. Alternativ oder zusätzlich können die Metallrohre des zweiten Abschnitts für dessen geringere axiale spezifische Federkonstante aus Material mit einem im Vergleich zum Material des ersten Abschnitts geringerem Elastizitätsmodul bestehen, z.B. aus einem Material, mit einem um mindestens 10%, bevorzugt mindestens 15 bis 20% geringeren Elastizitätsmodul als ihn das Material des ersten Abschnitts aufweist. Als Material des zweiten Abschnitts kann ein Aluminiumwerkstoff, Aluminium, ein Kupferwerkstoff oder Kupfer verwendet werden, während der erste Abschnitt aus Edelstahl besteht. Bei Ausführungsformen, in denen der zweite Abschnitt aus einem anderen Metall besteht, z.B. aus einem Aluminiumwerkstoff, Aluminium, einem Kupferwerkstoff oder Kupfer, ist bevorzugt angrenzend an den ersten Abschnitt eine Wandung aus dem Metall des zweiten Abschnitts zwischen dem innerem und äußerem gewellten Rohr des zweiten Abschnitts angeordnet. Weiter bevorzugt ist angrenzend an den zweiten Abschnitt eine Wandung aus Edelstahl zwischen dem innerem und äußerem gewellten Rohr aus Edelstahl des ersten Abschnitts angeordnet, so dass der erste und zweite Abschnitt des Kryostats zumindest in ihrem Kontaktbereich endständig mit einer Wandung, die sich zwischen dem inneren und äußeren gewellten Rohr erstreckt, aus jeweils dem gleichen Material überdeckt sind, aus dem der Abschnitt des Kryostats besteht.

Bevorzugt ist die geringere axiale spezifische Federkonstante des zweiten Abschnitts dadurch eingestellt, dass die Wellung des zweiten Abschnitts ringförmig ist, d.h. die Wellungen sind jeweils umlaufend in sich geschlossen, wohingegen die Wellung des ersten Abschnitts dadurch eine größere spezifische Federkonstante aufweist, dass dessen Wellung spiralförmig ist, d.h. eine durchgehende, um die Längsachse des Kryostats umlaufende Welle aufweist. Optional kann der zweite Abschnitt für die geringere axiale spezifische Federkonstante eine ringförmige Wellung in Kombination mit einer größeren Welltiefe und/oder einer größeren Anzahl von Wellen pro Längenabschnitt und/oder einer geringeren Wandstärke aufweisen und/oder aus einem Material mit geringerem Elastizitätsmodul bestehen als der spiralförmig gewellte erste Abschnitt. Bevorzugt weisen beide konzentrischen Metallrohre des Kryostats im zweiten Abschnitt dieselbe Welltiefe, dieselbe Wellzahl pro Längenabschnitt, dieselbe Wandstärke, dasselbe Material und dieselbe Art der Wellung, insbesondere eine ringförmige Wellung auf.

Insbesondere ist bevorzugt, dass die Metallrohre des Kryostats aus Stahl derselben Zusammensetzung, insbesondere aus identischem Stahl, vorzugsweise bei identischer Wandstärke bestehen. Der Wellrohrabschnitt mit geringerer spezifischer Federkonstante (Kompensationssektion) ist bevorzugterweise an die angrenzenden bzw. die sie umgebenden ersten Abschnitte angeschweißt, wobei je nach Konstruktionsart die Abschnitte einen gemeinsamen Vakuumraum aufweisen oder die Abschnitte durch eine radial zwischen den Metallrohren des Kryostat angeordnete Wand getrennt sind, so dass in den verschiedenen Abschnitten individuelle Vakuumräume vorhanden sind.

Ein erster und ein zweiter Abschnitt des Kryostats können, dadurch miteinander verbunden sein, dass ihre gewellten Metallrohre an ihren Stirnflächen miteinander verschweißt sind. Alternativ können die Metallrohr des ersten Abschnitts mit denen eines zweiten Abschnitts aus einem einstückigen, längs verschweißten gewellten Metallblech bestehen, wobei der zweite Abschnitt eine geringere axiale spezifische Federkonstante als der erste Abschnitt aufweist.

Bevorzugt bilden die konzentrischen gewellten Metallrohre zwischen sich einen durchgängigen Zwischenraum mit ringförmigem Querschnitt, in dem ein Vakuum anliegt und vorzugsweise Isoliermaterial und Abstandshalter angeordnet ist. In einer alternativen Ausführungsform kann ein erster und ein zweiter Abschnitt des Kryostats jeweils einen separaten Zwischenraum mit ringförmigem Querschnitt aufweisen, wobei der erste und ein zweiter Abschnitt in einer gemeinsamen oder zwei aneinander angrenzenden parallelen Platten aneinander angrenzen, die den Zwischenraum und die Stirnflächen der konzentrischen Metallrohre überdecken bzw. verschließen.

Bei der Montage eines erfindungsgemäßen Supraleiterkabels zwischen zwei festen Endpunkten ist bevorzugt, dass zumindest ein zweiter Abschnitt des Kryostats mit Überlänge, zum Beispiel mit einem größeren Radius montiert wird, als er im abgekühlten Zustand einnimmt. Diese Montage bei Umgebungstemperatur, d.h. vor dem Kühlen des Kryostats durch Einfüllen eines Kühlmittels, insbesondere von flüssigem Stickstoff, führt bei Befüllung mit Kühlmittel, d.h. im Betriebszustand des Supraleiterkabels zu einer Kompensation der Differenz der Längenänderung zwischen Kryostat und Kabelseele.

Vorzugsweise ist die Kabelseele mittels eines Verschlussstücks jeweils an den Enden des Kryostats festgelegt. Ein solches Verschlussstück kann beispielsweise den Innenquerschnitt des Kryostats überdecken und eine Durchtrittsöffnung für die Kabelseele aufweisen, in welcher die Kabelseele optional fixiert ist. Bei einer Kabelseele, die einen axial verlaufenden Kühlkanal zum Durchtritt von Kühlmittel aufweist, kann der Kühlkanal durch die Durchtrittsöffnung für die Kabelseele zugänglich sein, so dass ein Verschlussstück optional nur die Durchtrittsöffnung für die Kabelseele aufweisen kann. Bevorzugt erfolgt der Kühlmitteldurchfluss durch den Kryostat zwischen Kabelseele und Kryostat, so dass ein Verschlussstück zusätzlich zur Durchtrittsöffnung für die Kabelseele eine Durchtrittsöffnung für Kühlmittel aufweisen kann.

### Genaue Beschreibung der Erfindung

Die Erfindung wird nun in größeren Einzelheiten mit Bezug auf die Figuren beschrieben, die schematisch
- in Figur 1 den Aufbau eines erfindungsgemäßen Supraleiterkabels,
- in Figur 2 einen Querschnitt durch den Kryostaten einer Ausführungsform eines erfindungsgemäßen Kabels im Schnitt und
- in Figur 3 einen Querschnitt durch einen Kryostaten eines erfindungsgemäßen Kabels in weiterer Ausführungsform zeigen.

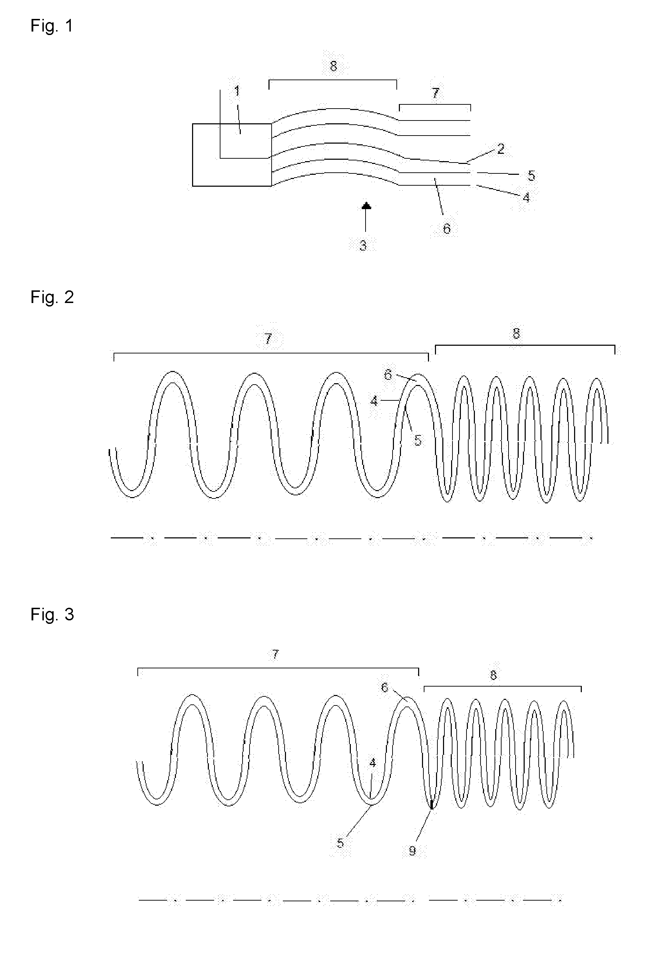

Die Figur 1 zeigt ein Verschlussstück 1, in dem die Kabelseele 2 an einem Ende des Kryostats 3 festgelegt ist. Der Kryostat 3 weist ein äußeres gewelltes Rohr 4 und ein konzentrisch angeordnetes inneres gewelltes Rohr 5 auf, zwischen denen eine Isolierung 6 angeordnet ist, insbesondere ein Vakuum, Abstandshalter zwischen dem äußeren Rohr 4 und dem inneren Rohr 5, sowie optional Isoliermaterial.

Der Kryostat 3 weist einen ersten Abschnitt 7 mit einer ersten axialen spezifischen Federkonstante auf. In einem axialen angrenzenden Bereich weist der Kryostat 3 einen zweiten Abschnitt 8 auf, der eine zweite axiale spezifische Federkonstante hat, die maximal 20%, bevorzugter maximal 10% der axialen spezifischen Federkonstante des ersten Abschnitts 7 beträgt. Entsprechend der bevorzugten Ausführungsform ist der zweite Abschnitt 8 des Kryostats 3 vor Befüllung mit Kühlmittel mit Überlänge zwischen den festgelegten Endpunkten des Kabels angeordnet, wobei insbesondere nur der zweite Abschnitt 8 und der in diesem zweiten Abschnitt 8 angeordnete axiale Abschnitt der Kabelseele 2 mit Überlänge montiert sind. Am Verschlussstück 1 ist die Kabelseele 2 gegenüber dem Kryostat 3 festgelegt, so dass beim Einfüllen von Kühlmittel in das innere Rohr 5 des Kryostats 3 die Kabelseele 2 stärker kontrahiert als der Kryostat 3. Die geringere axiale spezifische Federkonstante des zweiten Abschnitts 8 führt dazu, dass die Last, die durch die stärkere Kontraktion der Kabelseele 2 gegenüber dem Kryostat 3 erzeugt wird, vornehmlich zu einer Kompression im zweiten Abschnitt 8 führt. Wegen der gegenüber dem ersten Abschnitt 7 geringeren axialen spezifischen Federkonstante des zweiten Abschnitts 8 kann dort eine stärkere Kompression des Kryostats 3 erfolgen, so dass die Last zwischen Kryostat 3 und Kabelseele 2 insgesamt geringer ist, als sie bei einem Vergleichskryostat wäre, der über die gleiche Länge einheitlich aus einem ersten Abschnitt 7 besteht.

Figur 2 zeigt einen Schnitt durch einen Kryostat 3, bei dem zwischen zwei ersten Abschnitten 7 ein zweiter Abschnitt 8 angeordnet ist. Äußeres Rohr 4 und inneres Rohr 5 von erstem und zweitem Abschnitt 7, 8 gehen an ihren Stirnseiten jeweils stoffschlüssig ineinander über, beispielsweise einstückig oder mit einer zwischenliegenden Schweißverbindung. In dieser Ausführungsform bildet der Kryostat 3 über den ersten Abschnitt 7 und den zweiten Abschnitt 8 eine einheitliche, durchgängige Isolierung 6, insbesondere einen durchgehenden vakuumierten Zwischenraum zwischen äußerem Rohr 4 und innerem Rohr 5.

Figur 3 zeigt einen Schnitt durch eine alternative Ausführungsform des Kryostats 3, bei dem ein erster Abschnitt 7 mit einem zweiten Abschnitt 8 verbunden ist, wobei zwischen dem ersten Abschnitt 7 und dem zweiten Abschnitt 8 eine Wand 9 angeordnet ist, die den Querschnitt zwischen innerem Rohr 5 und äußerem Rohr 4 verschließt. In dieser Ausführungsform kann sowohl der erste Abschnitt 7 als auch der zweite Abschnitt 8 eine separate Wand 9, 9' aufweisen, die jeweils den ringförmigen Querschnitt zwischen äußerem Rohr 4 und inneren Rohr 5 überdeckt, wobei die Wände 9, 9', die den ersten und zweiten Abschnitt begrenzen, aneinander angrenzen. In diesen Ausführungsformen trennt die Wand 9, 9' zwischen dem ersten Abschnitt 7 und dem zweiten Abschnitt 8 das Vakuum der Isolierung 6.

### Bezugszeichenliste:

- 1: Verschlussstück
- 2: Kabelseele
- 3: Kryostat
- 4: äußeres Rohr
- 5: inneres Rohr
- 6: Isolierung
- 7: erster axialer Abschnitt
- 8: zweiter axialer Abschnitt
- 9, 9': Wand

## Patentansprüche

1. Supraleiterkabel mit einem Kryostat (3), der ein äußeres gewelltes Rohr (4) und ein konzentrisches inneres gewelltes Rohr (5) mit zwischen diesen angeordneter Isolierung (6) aufweist, mit einer längs des Kryostats (3) im inneren gewellten Rohr (5) angeordneten Kabelseele (2), die jeweils an den Enden des Kryostats (3) festgelegt ist, **dadurch gekennzeichnet, dass**
der Kryostat (3) in einem ersten axialen Abschnitt (7) eine erste spezifische Federkonstante in axialer Richtung aufweist und in einem zweiten axialen Abschnitt (8) eine zweite spezifische Federkonstante in axialer Richtung, die maximal 20% der ersten spezifischen Federkonstante beträgt.

2. Supraleiterkabel nach Anspruch 1, **dadurch gekennzeichnet, dass** der zweite Abschnitt (8) des Kryostats (3) maximal 10% der axialen Länge des zweiten Abschnitts (8) umfasst.

3. Supraleiterkabel nach Anspruch 1 oder 2, **dadurch gekennzeichnet, dass** die Kabelseele bei Umgebungstemperatur eine Überlänge gegenüber dem Kryostat aufweist.

4. Supraleiterkabel nach einem der voranstehenden Ansprüche, **dadurch gekennzeichnet, dass** das äußere gewelltes Rohr (4) und das konzentrische innere gewellte Rohr (5) des Kryostats (3) in dem ersten axialen Abschnitt (7) eine spiralförmige Wellung aufweisen und in dem zweiten axialen Abschnitt (8) eine ringförmige Wellung.

5. Supraleiterkabel nach einem der voranstehenden Ansprüche, **dadurch gekennzeichnet, dass** das äußere gewelltes Rohr (4) und das konzentrische innere gewellte Rohr (5) des Kryostats (3) in dem zweiten axialen Abschnitt (8) eine größere Welltiefe aufweisen als in dem ersten axialen Abschnitt (7).

6. Supraleiterkabel nach einem der voranstehenden Ansprüche, **dadurch gekennzeichnet, dass** das äußere gewellte Rohr (4) und das konzentrisches innere gewellte Rohr (5) des Kryostats (3) in dem zweiten axialen Abschnitt (8) eine größere Anzahl von Wellen pro Längenabschnitt aufweisen als in dem ersten axialen Abschnitt (7).

7. Supraleiterkabel nach einem der voranstehenden Ansprüche, **dadurch gekennzeichnet, dass** das äußere gewellte Rohr (4) und das konzentrische innere gewellte Rohr (5) des Kryostats (3) in dem zweiten axialen Abschnitt (8) eine geringere Wandstärke aufweisen als in dem ersten axialen Abschnitt (7).

8. Supraleiterkabel nach einem der voranstehenden Ansprüche, **dadurch gekennzeichnet, dass** das äußere gewellte Rohr (4) und das konzentrische innere gewellte Rohr (5) des Kryostats (3) in dem zweiten axialen Abschnitt (8) aus Metall mit einem geringeren Elastizitätsmodul bestehen als das Metall in dem ersten axialen Abschnitt (7) aufweist.

9. Supraleiterkabel nach einem der voranstehenden Ansprüche, **dadurch gekennzeichnet, dass** das innere gewellte Rohr (5) und das äußere gewellte Rohr (4) jeweils des ersten und zweiten Abschnitts (7, 8) mit ihren Stirnflächen stoffschlüssig miteinander verbunden sind und zwischen sich einen durchgängigen Zwischenraum ausbilden.

10. Supraleiterkabel nach einem der voranstehenden Ansprüche, **dadurch gekennzeichnet, dass** in dem axialen Abschnitt des Kryostats (3), in dem der erste Abschnitt (7) an den zweiten Abschnitt (8) angrenzt, eine Wandung (9, 9') zwischen innerem gewellten Rohr (5) und äußerem gewellten Rohr (4) angeordnet ist, die sich über den Abstand zwischen dem innerem und dem äußerem gewellten Rohr (5, 4) erstreckt.

11. Supraleiterkabel nach einem der voranstehenden Ansprüche, **dadurch gekennzeichnet, dass** das innere gewellte Rohr (5) und das äußere gewellte Rohr (4) des Kryostats (3) aus demselben Metall mit gleicher Wandstärke bestehen.

12. Verfahren zur Herstellung einer elektrischen Verbindung mittels eines Supraleiterkabels zwischen zwei Verschlussstücken (1), zwischen denen ein Supraleiterkabel in einem Kryostaten (3), der ein äußeres Rohr (4) und ein konzentrisches inneres Rohr (5) mit zwischen diesen liegender Isolierung (6) aufweist und eine innerhalb des Kryostats (3) angeordnete supraleitende Kabelseele (2), **dadurch gekennzeichnet, dass** der Kryostat (3) in einem ersten Abschnitt (7) eine erste axiale spezifische Federkonstante aufweist und in einem zweiten Abschnitt (8) eine zweite axiale Federkonstante, die maximal 20% der ersten axialen spezifischen Federkonstante beträgt und anschließend Kühlmittel in den Kryostaten gefüllt wird.

13. Verfahren nach Anspruch 12, **dadurch gekennzeichnet, dass** die axiale Länge des zweiten Abschnitts (8) maximal 10% der Länge des ersten Abschnitts (7) beträgt.

14. Verfahren nach einem der Ansprüche 11 bis 13, **dadurch gekennzeichnet, dass** nach dem Montieren des Supraleiterkabels bei Umgebungstemperatur zwischen zwei Verschlussstücken (1) Kühlmittel in den Kryostat (3) gefüllt wird.

15. Verfahren nach einem der Ansprüche 11 bis 14, **dadurch gekennzeichnet, dass** die Kabelseele (2) bei Umgebungstemperatur eine Überlänge gegenüber dem Kryostaten (3) aufweist.
